# EUROPEAN PATENT APPLICATION

(11) **EP 3 144 377 A1**
(43) Date of publication of application: **22.03.2017**
(21) Application number: 15185712.5
(22) Date of filing: 17.09.2015
(51) Int. Cl.: C12G 1/028, C12G 1/022

(54) **TANK FOR OXYGEN-FREE FERMENTATION AND METHOD FOR WINEMAKING**

(71) Applicant: Elegir, Andrea, 14051 Loazzolo (AT) (IT)
(72) Inventor: Elegir, Andrea, 14051 Loazzolo (AT) (IT)
(74) Representative: Bruni, Giovanni

(57) **Abstract**

Tank (1) for wine fermentation comprising stirring means (15) of the liquid contained in the tank, a door (13) for tank inspection and washing and a counter-door (13') to provide a gap together with the door (13), said door (13) and counter-door (13') being positioned on the lower wall of the tank (1), at least a valve (5) to blow nitrogen therein, at least a control valve (6) of the inner pressure in the tank (1), a level indicator (20) of the liquid inside the tank (1) and being characterized by a lees collection well (9) positioned on the lower wall of the tank (1), at least a scraper means (3) to convey the solid lees in said well (9), at least a drain tap (4) positioned in the end part of the well (9), a hermetic partition (16), positioned inside the collection well (9) for eliminating the lees from the well (9) while maintaining the liquid inside the tank (1), an inflating and sealing system (2) positioned on the upper wall of the tank (1) and connected to an air or inert gas chamber (2') inside the tank (1) configured to inflate due to the volume reduction of liquid contained in the tank (1) after the lees elimination so that the liquid level is perfectly covered thus avoiding the contact with oxygen.

## Description

The present invention relates to a new fermentation tank for providing all the steps of winemaking without oxygen, and to a method for using such fermentation tank.

As it is known at the state of the art, the classic process of grapes winemaking has a great drawback, i.e. the oxidation of musts due to the contact of the same with oxygen. In particular, the oxidation causes the must to turn brown and, the oxidation phenomena reduce irreversibly the quality of musts and, after the fermentation, of the wine. If the ingredients of the must were protected against oxidation, they would confer the future wine an unquestionable qualitative improvement (flavouring, colour, typicalness etc...).

One of the main problems, in addition to the protection of the must of grapes during and immediately after the pressing, in the straining step, for which there exist remarkable known systems yet, is the protection of the grape must against the contact with oxygen in the step which goes from the beginning of fermentation to the bottling and in particular towards the end of the alcoholic fermentation and at the end of the same, in which the racking begins for separating the solid phases of musts, now partially or totally fermented (which can be defined wines), and in the next steps of clarification and protein and tartaric stabilization (when needed).

The most used method of protection against oxidation in enology is the addition, in the various steps of winemaking, of antioxidant substances, mainly sulphur dioxide in liquid solution, in gas form or in solid form as potassium metabisulphite.

As it is known, the sulphur dioxide is dangerous for the human body.

At the state of the art, there exist systems which carry out the winemaking by hyper-reduction which provide a more effective protection against oxidation, above all during the steps of extraction of the must which go from the fermentation step to the wine bottling one, thanks to the suitable usage of inert gases as CO2 and N2.

Moreover, the known systems are limited to avoid the contact of oxygen and wine by saturating the collection container with inert gases which reduce their oxidation. But such systems do not constitute a valid instrument able to eliminate the steps where the contact between wine and oxygen is greater, i.e. during racking.

Therefore there exists the need of a system which allows to realize all the winemaking steps without oxygen, without using must correction chemicals. Anyway there are not known at the state of the art efficient systems and methods which allow to carry out all the steps of winemaking completely without oxygen, in particular the steps from the fermentation to the bottling.

Aim of the present invention is therefore a new winemaking tank able to solve the problems linked to the oxidation phenomena, which can occur during the whole process of winemaking.

Another aim of the present invention allows to carry out the whole process of winemaking without the need of racking for eliminating clarification lees and bottoms, for the whites from the beginning of the fermentation and for the reds after the maceration.

Another aim of the present invention is to eliminate the usage of pumps and filters during the winemaking steps and to use them only, if needed, in the bottling step.

Another aim of the present invention is to obtain, by using said tank, a final product preserving all the flavouring peculiarities of the starting grapes.

The object of the present invention is a new tank for winemaking as claimed in the independent claim 1.

Another object of the present invention is further a method for carrying out the winemaking in said new tank.

Various embodiments of the invention will be described in the following as a way of example with reference to the appended drawings:
Figure 1 shows a scheme of the basic structure of a circular winemaking tank according to an embodiment of the present invention;

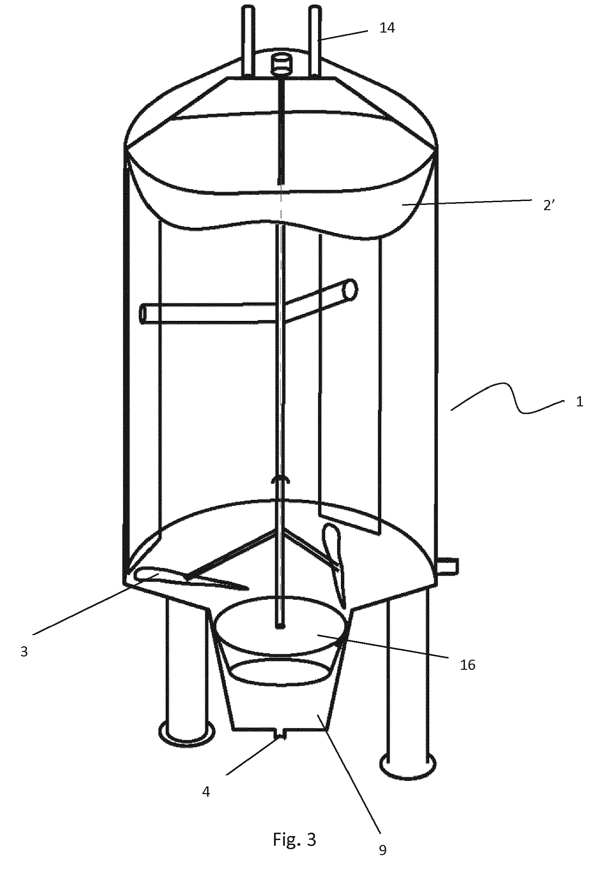

Figures 2 and 3 show a scheme of the lees collection system according to an embodiment of the present invention;
figure 4 shows a detail of the lees collection tank of a tank with rectangular or square shape, according to an embodiment of the present invention.

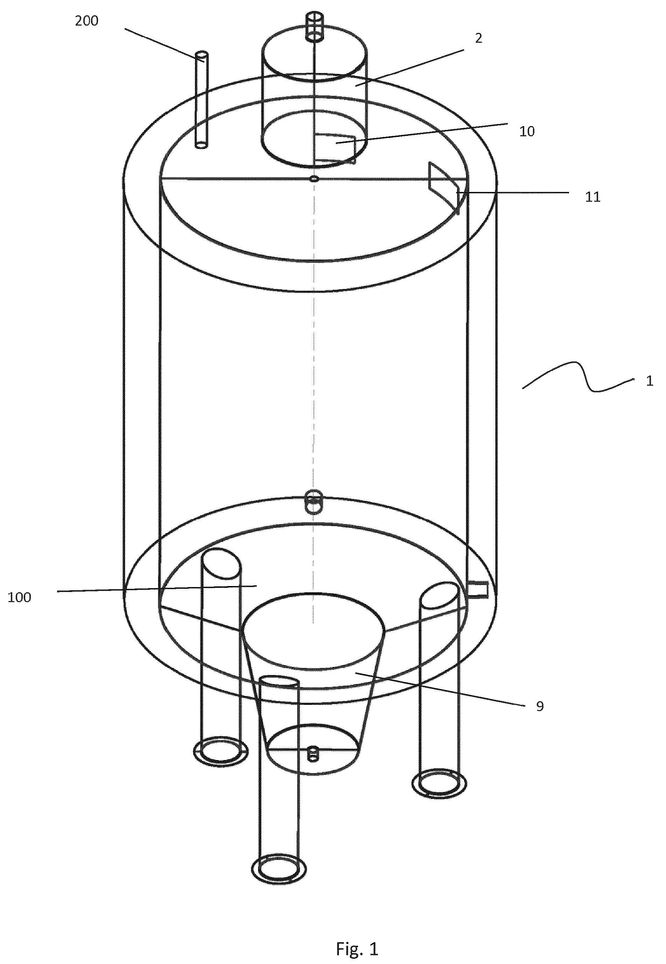

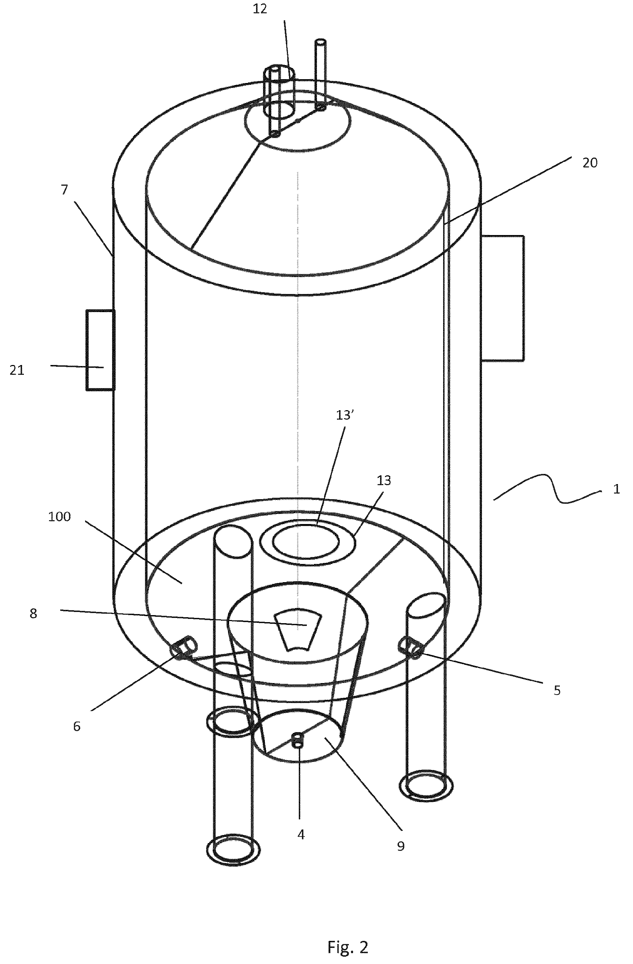

As it is shown in figs. 1 and 2, a type of tank 1 for winemaking is circular and comprises stirring means 15, for example of propeller kind, which can be both fixed stably to the tank and of removable kind, with the function of stirring the wine mass when it is needed (for example during a clarification step or during fermentation) to eliminate part of the carbon dioxide generated; an inner inflatable air chamber 2 which, by inflating while the wine level sinks in the tank, avoids its contact with air.

Said tank 1 comprises further a door 13 generally of circular shape which is opened from outside, or of elliptical shape, if it opens from inside, with a diameter of about 40 cm, for the inspection and the washing of the tank once this one is emptied, and a counter-door 13' with the function of providing an air gap together with the door with the function of thermal insulating when the tank is used in the refrigerating process for the tartaric stabilization. Both the door 13 and the counter-door 13' are generally positioned on the lower wall 100 of the tank, at few centimeters from the bottom of the same tank 1.

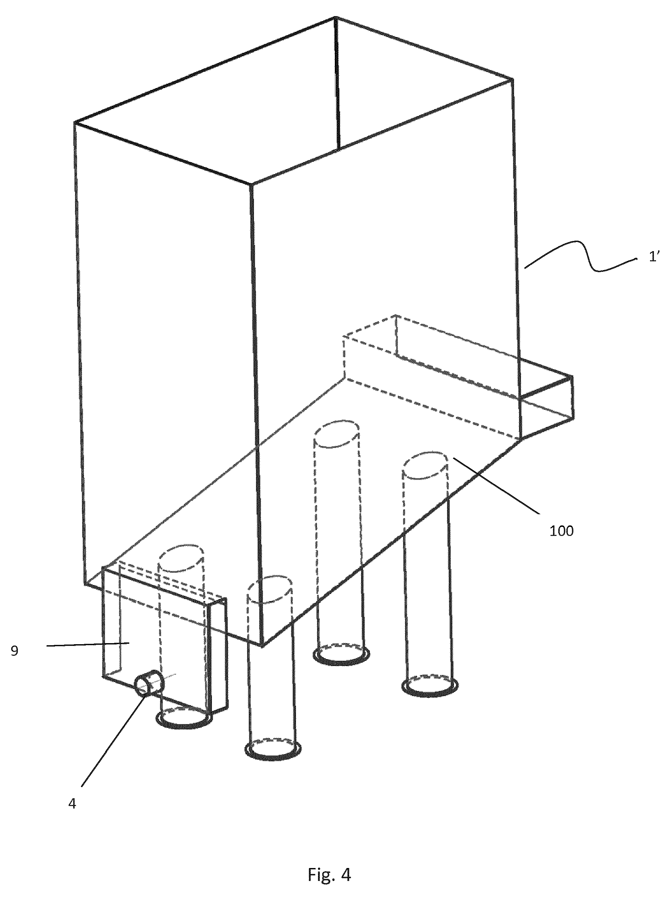

Said tank 1 comprises further at least a scraper or vibrator means 3 to convey the solid lees in a suitable collection well 9, which, in case of a tank with square section (fig. 4) with inclined bottom 100, can be fixed to a wall of the tank, a drain tap 4 provided in the final part of the collection well 9, valves to blow nitrogen 5 therein and control valves 6 for the inner pressure of the tank, a level indicator 20, for example a transparent tube positioned laterally to the air chamber 2 which allows to see the level of the wine in the tank, possibly a heating system 21, for example a cylinder containing a coil which allows to heat the tank if needed and an insulation 7 to insulate and control the inner temperature of the tank.

The collection well 9 is further provided with inserts in glass or other transparent material, best known as "glass sight funnel" 8 for working control, which allow to see inside the collection well 9 so that the lees level is evaluated.

Inside the tank 1, it is further provided a micro-oxygenator 10 and a measurer 11 of the dissolved oxygen.

The tank 1 object of the present invention provides to carry out the alcoholic fermentation, the malolactic fermentation for the reds, possibly battonage on the first and second lees, the various clarifications and the tartaric stabilization thus arriving, through a suitable filtration system, directly to bottling.

Moreover inside said tank 1 it is possible to carry out the whole step of grape working, starting from the fermentation to the pre-bottling without the need of racking.

In fact, said tank 1, since it is provided with a collection and elimination system of the lees and bottoms produced by clarification, provides also this step without the need of racking.

Therefore the object of the present invention guarantees a remarkable saving of labour force and a minimum contact with oxygen inside the same.

In particular, the lees collection tank 9, as it is shown in figs. 1 and 2, is positioned on the lower wall of the tank 1 in case of a circular tank. It can be of inclined section vibrational kind, having the lees collection well 9, as it is shown in fig. 4, if the tank is of rectangular or square kind. The lees collection modes are based on the use of one or more scrapers 3, which convey the bottoms in the collection well 9. The collection well 9 can be positioned laterally or centrally according to the shape of the tank 1. Basically for circular tanks 1 it is simpler to have a central collection system while for rectangular or square section tanks 1' it is simpler a side collection system (fig. 4).

The scraper 3 can be of inclined blades or spiral type: the system with inclined blades can be applied to circular section tanks 1 as well as to rectangular section tanks 1', while the spiral system can be applied only to circular section tanks.

A little motor 12 can be used to move the blades of the scraper 3, whether they are of blades or spiral kind.

A partition 16 is positioned inside the collection well 9 and in case of circular tank it has circular shape, while in case of rectangular or square tank it is of guillotine type, it serves for the separation of the lees collected from the rest of the liquid once it is desired to empty the lees collection well 9. By creating a closure of hermetic kind, said partition 16 allows to empty the lees collection well 9 even if the tank 1 contains the liquid therein. It can be realized with a screw system on a central column so that, at the end of the work, it closes hermetically the bottom or with a sliding door separating the two parts.

The inflating and sealing system 2 positioned on the upper wall of the tank and connected to an air or inert gas chamber 2' inside the tank 1 able to inflate and deflate by means of a little compressor 14. Such chamber 2' has the function of inflating at the reduction of liquid quantity due to the lees elimination to reach the wine level avoiding the contact with oxygen. Obviously the air chamber 2' is realized in material for food usage and has to be perfectly sealed with safety valves 200 and pressure sealing system. In a preferred embodiment said air chamber 2' is positioned on the upper wall of the tank 1 and has two main functions:
1. it allows a greater ventilation of carbon dioxide during fermentation (which occurs with deflated chamber)
2. it allows a more efficient inflating of the chamber since it is provided with a lower section with respect to all the upper part of the tank and since it is dimensioned to compensate the volume reduction caused by the elimination of the lees.

Example 1 The method of winemaking for white wines consists in the following steps:
1. grape pressing;
2. static flotation or clarification;
3. racking in tank;
4. fermentation with scraper activation and opening of the collection well 9;
5. lees eliminating and scraper means 3 turning off and simultaneous air or inert gas chamber 2' inflation inside the tank 1, for avoiding the contact of oxygen and surface of liquid, oxygen which is however reduced also by the presence of CO2;
6. lowering temperature of tank 1 at the end of the fermentation to avoid the malolactic or carrying out second lees battonage;
7. protein stabilization or possible clarification with the elimination of the bottoms as for the lees, and simultaneous air or inert gas chamber 2' inflation inside the tank 1, for avoiding the contact of oxygen and surface of liquid, oxygen which is however reduced also by the presence of CO2;
8. bottling directly from the tank by carrying out the additions in tank and by filtering also with series filters; flour, cardboards and cartridge compensated obviously with nitrogen if sulphur dioxide is not used.

Example 2 The method of winemaking for red wines consists in the following steps:
1. stems pressure;
2. maceration with devatting before the end of fermentation and transfer in the tank;
3. fermentation with scarper activated and door opened;
3. once the door is full or the fermentation is ended the lees can be eliminated and the scraper can be turned off;
5. when the fermentation is ended the malolactic fermentation is waited and the upper chamber is inflated to avoid contact with oxygen, which is however reduced also by the presence of CO2;
6. at the end of the malolactic fermentation the lees are separated again and there occur possible clarifications and stabilizations or the wine is maintained in refinement by controlling the chamber inflation periodically;
7. bottling.

Another embodiment of the present invention comprises further a control method by means of an electronic controller (PLC) to manage automatically some steps of the productive process with the possibility of personalized programs or according to the kind of wine to be produced.

In addition to the embodiments of the invention, as above described, it is to be intended that there exist many other variants. Further, it is to be intended that said embodiments are only example and do not limit the object of the invention and its possible application or configurations. On the contrary, even if the above described description allows the experts in the field to carry out the present invention at least according to an embodiment thereof, it is to be intended that many variations of the elements above are possible without departing from the object of the invention, as encompassed by the appended claims, literally interpreted and/or according to legal equivalents thereof.

## Claims

1. Tank (1) for wine fermentation comprising stirring means (15) of the liquid contained in the tank, a door (13) for tank inspection and washing and a counter-door (13') to provide a gap together with the door (13), said door (13) and counter-door (13') being positioned on the lower wall of the tank (1), at least a valve (5) to blow nitrogen therein, at least a control valve (6) of the inner pressure in the tank (1), a level indicator (20) of the liquid inside the tank (1) and being **characterized by**:
- a lees collection well (9) positioned on the lower wall of the tank (1),
- at least a scraper means (3) to convey the solid lees in said well (9);
- at least a drain tap (4) positioned in the end part of the well (9),
- a hermetic partition (16), positioned inside the collection well (9) for eliminating the lees from the well (9) while maintaining the liquid inside the tank (1),
- an inflating and sealing system (2) positioned on the upper wall of the tank (1) and connected to an air or inert gas chamber (2') inside the tank (1) configured to inflate due to the volume reduction of liquid contained in the tank (1) after the lees elimination so that the liquid level is perfectly covered thus avoiding the contact with oxygen.

2. Tank (1) according to claim 1, wherein said stirring means (15) are fixed stably to the tank or are of removable kind.

3. Tank (1) according to claim 1 or 2, wherein said lees collection well (9) is of inclined section vibrational kind.

4. Tank (1) according to any one of claim 1 to 3, wherein said scraper means (3) are of inclined blades or spiral type.

5. Tank (1) according to any one of claim 1 to 4, further comprising a heating system (21) connected to the tank (1) and an insulation (7) to insulate and control the inner temperature of the tank (1).

6. Tank (1) according to any one of claim 1 to 5, further comprising therein a micro-oxygenator (10) and a measurer (11) of the dissolved oxygen.

7. Tank (1) according to any one of claim 1 to 6, further comprising a motor (12) for moving the scraper means (3).

8. Method of winemaking using a tank (1) according to any one of claim 1 to 7, comprising the following steps of:
- fermentation with activation of the scarper means (3) and opening of the well (9);
- lees elimination and scraper means (3) turning off and simultaneous air or inert gas chamber (2') inflation inside the tank (1), for avoiding the contact of oxygen and surface of liquid;
- lowering temperature of tank (1) at the end of the fermentation to avoid the malolactic or carrying out second lees battonage;
- protein stabilization or possible clarification and elimination of the bottoms and scraper means (3) turning off and simultaneous air or inert gas chamber (2') inflation inside the tank (1), for avoiding the contact of oxygen and surface of liquid;
- wine bottling directly from the tank (1).
